# EUROPEAN PATENT APPLICATION

(11) **EP 4 283 790 A1**
(43) Date of publication of application: **29.11.2023**
(21) Application number: 23175173.6
(22) Date of filing: 24.05.2023
(51) Int. Cl.: H01R 4/34, H01R 13/44, H01R 31/08, B60R 16/02, F16B 37/00, B60L 3/00, H01R 13/707

(54) **SCREW CONTACT POWER CONNECTOR AND METHOD OF CONNECTING AND DISCONNECTING SUCH A CONNECTOR**

(30) Priority: 24.05.2022 FR 2204999
(71) Applicant: Aptiv Technologies Limited, 14004 St. Michael (BB)
(72) Inventor: MENARD, Pascal, 78450 Villepreux (FR); MANNE, Rama Krishna, 522257 Pedapulivarru (IN)
(74) Representative: INNOV-GROUP

(57) **Abstract**

An electrical power connector (2), comprising a housing (4), at least one electrically conductive element (200), a cover (15) and at least one screw (6) for establishing an electrical connection with said electrically conductive element (200). The connector (2) is connected to an interlock circuit. The housing (4) comprises retention means (18) configured to hold the screw (6) in a high position. The cover (15) is configured to occupy at least an open position in which the screw (6) is accessible, and a closed position in which the screw (6) is not accessible. The interlock circuit is open when the cover (15) is in the open position and closed when the cover (15) is in the closed position,

The screw (6) prevents the cover (15) from being placed in the closed position when it is in the high position.

A method of disconnecting a connector assembly comprising this connector (2).

## Description

### Technical area

This disclosure relates to the field of automotive connectors and in particular to the field of power connectors.

### State of the art

There are power connectors that have a screw to make an electrical connection between a conductive element (e.g. a busbar), one end of which is inserted into the connector, and a counter-connector. The screw is then screwed onto the counter-connector and acts as an electrical contact pin between the connector and the counter-connector.

Such a connector is described for example in the following patent documents US 2012/0231 676 A1, WO2012/085390A1, DE102020212760A1 and JP2000090910A. In power connectors, it must be ensured that a user cannot electrocute himself with a conductive part of the screw or screws used as contact pins, if these are live. For example, a cover may be provided to prevent access to a conductive area of such screws.

A problem encountered with a prior art connector as described in US 2012/0231 676 A1 is that there remains a risk of electrocution on disassembly. Indeed, in the event of maintenance, after unscrewing, the screw may rest on the first thread of the counter-connector in which the screw is intended to be screwed. If the cover is unintentionally closed immediately after unscrewing, the interlock circuit that controls the power supply to the connector can be activated (i.e. "on"). The connector is then supplied with power and movement of the connector relative to the counter-connector can cause an arc that can damage the connector and/or counter-connector, or even injure the operator who may connect/disconnect the connector while it is energised. When first assembled in an OEM factory, this risk is usually avoided as it is well managed by the assembly and operating safety instructions. But it is more difficult to have the same level of safety during a maintenance operation.

### Statement of the invention

A connection assembly, a connector and a connection method are described below which at least partially contribute to increased security and safety.

Thus, there is described an electrical power connector, comprising a housing, at least one electrically conductive element, a cover and connection elements of an interlock circuit. The housing includes at least one cavity for housing a screw configured to make an electrical connection with the at least one electrically conductive element. The housing includes retention means configured to hold the screw in high position. The cover is mounted on the housing and is configured to occupy at least one open position in which the housing is open and the screw is accessible to be screwed in or out, and a closed position in which the housing is closed and the screw is not accessible. The interlock circuit is open when the cover is in the open position and closed when the cover is in the closed position.

In this connector the screw prevents the cover from being placed in the closed position when it is in the high position.

In this document, the expressions "high position", "higher position", "upper position", uppermost position", "low position", "lower position", "lowermost position", etc. refer only to an altitude or distance from the connection interface, and possibly to the orientation of the screw in the cross-sectional figures in particular. The expressions "high position" and "low position" can be replaced for example by "first position" and "second position" respectively.

In other words, the connection screw is pre-assembled on the connector where it is in the low position (and/or in a screw holder or screw carrier if the connector is equipped with such a screw holder or screw carrier). To perform a sealing test and to ensure transport with protection against dust, water or other ingresses the cover can be closed. The connector is preferably delivered with the cover in the closed position. Before the first screwing, the cover is opened, the connector is presented opposite the interface. When pushed with a tool, for example, it is stopped on the first thread of the screw insert of the interface. The screw can then be screwed in.

During maintenance, the screw retention means holds the screw in a high position after it has been unscrewed. Thus, this high position of the screw is maintained and does not allow the cover to be closed, even if the connector is removed from the interface. The interlock circuit is open and the connector cannot be energised. This provides additional safety for the operator.

This connector also optionally comprises one and/or other of the following features, each considered independently of the other or in combination with one or more others:
- the high position of the screw corresponds to its position in the housing when it is completely unscrewed;
- the cover passes from its open position to its closed position by rotation about a hinge and the screw blocks this rotation in an intermediate position of the cover when it is in the high position;
- it comprises a screw holder and the means of retaining the screw in the high position are arranged on this screw holder; it should be noted, however, that if the connector does not comprise a screw holder, the connector housing may itself comprise the retention means;
- the retention means are arranged on tongues forming a wall portion of a well configured to receive a screw head and the cover comprises reinforcement means arranged behind at least one tongue when the cover is in the closed or semi-closed position; it should be noted, however, that if the connector does not comprise a screw holder, the connector housing may itself comprise such a well;
- the screw comprises a cap made of electrically insulating material;
- the cap comprises serrated structures configured to cooperate with a screwing tool of the screw;
- the cap comprises a crown configured to cooperate with the retention means;
- the connector includes a data matrix, a portion of which is disposed on an outer surface of the cover and a portion of which is disposed on an outer surface of the housing that does not correspond to the cover, the data matrix being readable in its entirety only when the cover is in a closed position.

Also described below is a method of disconnecting a connection assembly comprising a connector, the connector comprising a screw with a head, the head being at least partially concealed by a cover of the connector, the method comprising an operation of opening the cover which causes an interlock circuit controlling the energisation of the screw to be opened, followed by an operation of unscrewing the screw, during which the head is moved from a first position to a second position. Once the screw is unscrewed (when the head is in the second position), the head prevents the cover from being placed in a position where the interlock circuit is closed.

### Brief description of the drawings

Further features and advantages will become apparent in the detailed discussion of various embodiments of the invention, the discussion being accompanied by examples and references to the accompanying drawings.
Figure 1 shows a schematic perspective of an example of a connector with the screws in the low position;
Figure 2 shows schematically in perspective an example of an embodiment of a connection screw for the connector of figure 1;
Figure 3 shows a schematic perspective of an example of a screw holder for the connector of figure 1;
Figure 4 shows a schematic perspective of an example of a housing for the connector of figure 1;
Figure 5 shows a schematic cross-section of the housing of figure 4 with the screw holder of figure 3;
Figure 6 shows a schematic perspective of the connector in Figure 1, with the screws in the high position;
Figure 7 shows a schematic cross-section of a cavity in which a screw is housed in the upper position;
Figure 8 shows schematically in perspective an example of a connection assembly comprising a connector such as that shown in Figures 1 and 5 to 7;
Figure 9 is a similar representation to figure 7 with the screw in the low position;
Figure 10 is a similar representation to figure 7 with the screw in the high position and the cover in the semi-closed position;
Figure 11 shows a schematic perspective of an example of a cover for the connector of Figure 1;
Figure 12 is a schematic cross-sectional view of the connector in Figure 1, with the screw in the high position and the cover in the semi-closed position;
Figure 13 is a schematic perspective view of the connection assembly in Figure 8, with the screw in the high position and the cover in the semi-closed position;
Figure 14 is a schematic perspective view of the connection assembly of Figure 8, with the screw in the low position and the cover in the closed position; and
Figure 15 is a schematic cross-sectional view of the connection assembly in Figure 8, with the screw in the low position and the cover in the closed position.

### Detailed description of an embodiment example

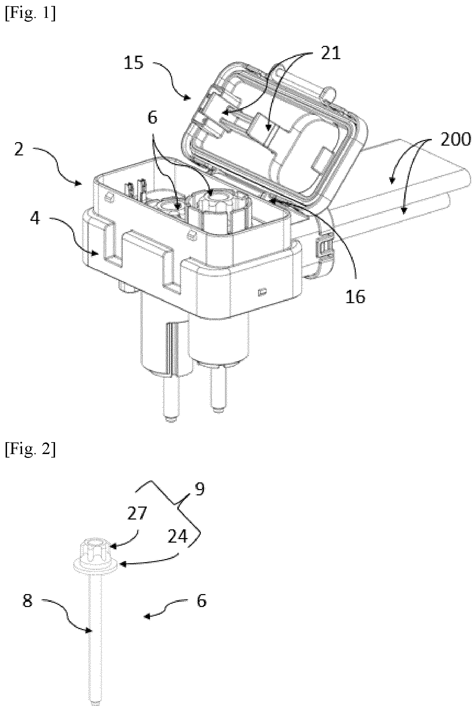

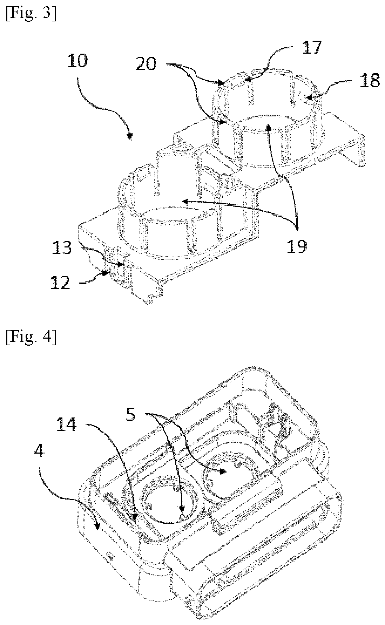

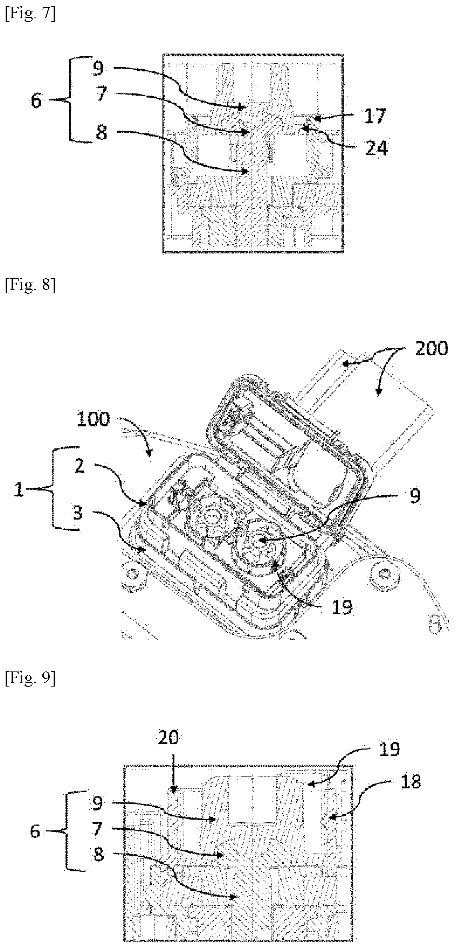

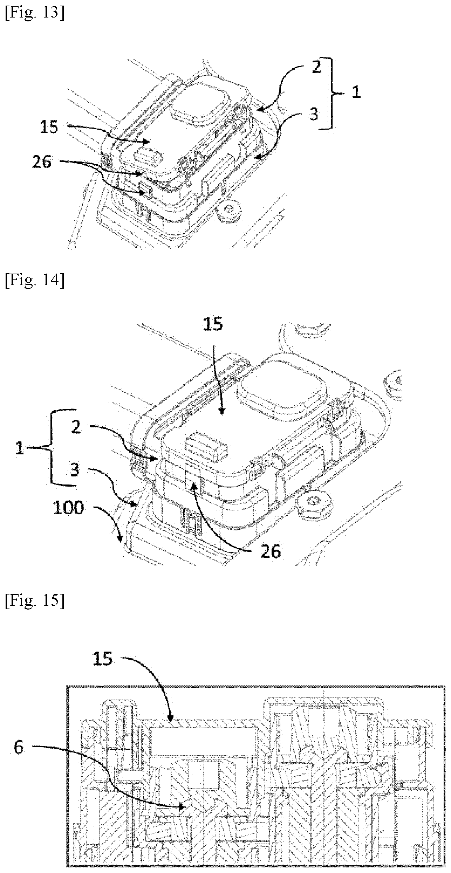

An example of an embodiment of a connector 2 is shown in Figure 1. This connector 2 is used in an electrical power circuit of a motor vehicle. Such a circuit is used, for example, to interconnect components 100 (see figures 8 and 14) such as a connection bar, a battery, a charging station, a converter, an electric motor, etc. This circuit then comprises a counter-connector 3 or socket electrically connected to this component 100 (see figures 2 and 3 for example). Optionally, the counter-connector 3 is mounted on or in this component 100. The connector 2 and the counter-connector 3 form a connection assembly 1.

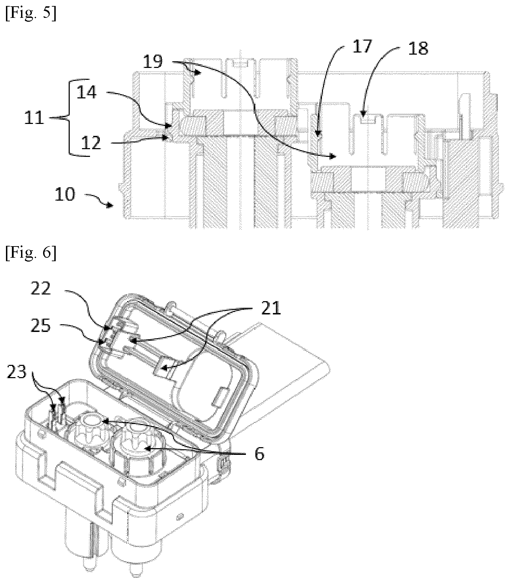

In the case of the example shown in the figures, the connector 2 and the counter-connector 3 are two-way power connectors. In this example, each channel of the connector 2 is electrically connected to a conductive element 200 (e.g., a connecting bar). The connector 2 comprises a housing 4 with two cavities 5 (see figure 5 for example) in each of which a power contact or terminal 6 (see figure 1 for example) is housed. This power contact or terminal is in the form of a metal screw 6 with a head 7 and a threaded rod 8 (see figure 2 for example). This screw 6 is also provided with a cap 9 of electrically insulating material (see figures 7 and 8 for example). The cap 9 has serrated structures 27 configured to cooperate with a tool for screwing or unscrewing the screw 6. Thus, the screw 6 can be screwed in or out without removing its protective cap 9.

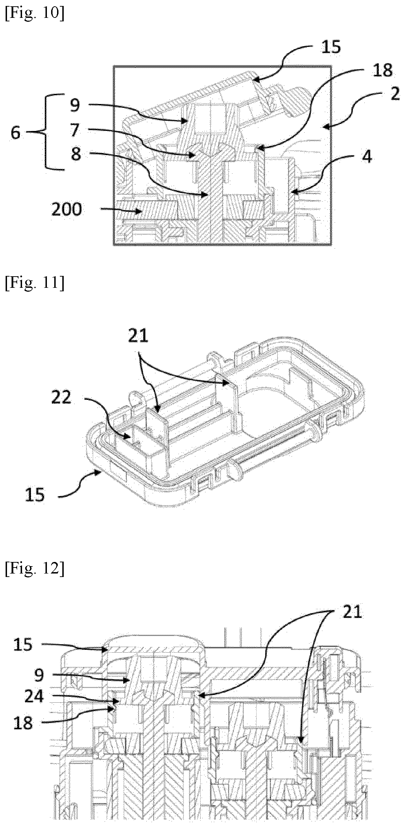

In the example shown in the figures, the connector 2 also has a screw holder 10 (see in particular figure 3). The screw holder 10 is mounted in the housing 4 by means of fastening means 11. For example, the fastening means 11 are in the form of resilient legs 12 each having a cut-out 13 configured to cooperate with a tooth 14 (see also Figure 5). The connector 2 also has a cover 15. In the example shown in the figures, the cover 15 is rotatably mounted on the housing 4 by means of hinge elements 16. The cover 15 is thus hinged between at least one open position in which each screw 6 is accessible for screwing or unscrewing it, and a closed position in which the cover 15 closes the housing 4 (e.g. hermetically by means of seals) and in which each screw 6 is completely concealed. The configuration of the connector 2 with the cover 15 in the open position is, for example, illustrated in Figure 1. The configuration of the connector 2 with the cover 15 in the closed position is for example illustrated by figures 14 and 15. Between the open and closed positions, the cover 15 can take at least one intermediate position called semi-closed (for example illustrated by figures 12 and 13).

In the semi-closed position, the cover 15 blocks the screw holder 10 to prevent the screws 6 from moving from a high position to a low position. In fact, the screw holder 10 has high and low protrusions 17 and 18 which allow the head 7 of the screw 6 to be held in the high position. In other words, these high 17 and low 18 protuberances form means for retaining the screw 6 in the high position. These high 17 and low 18 protrusions project from the inner surface of wells 19 in each of which a screw 6 is housed. In particular, each well 19 has a wall portion comprising resiliently deformable tabs 20. Some of these tabs 20 have a low protrusion 18 while others have a high protrusion 17. In this way, the cap 9 is held in place by a crown 24 in the high position, the crown 24 being caught between the high 17 and low 18 protrusions (see Figures 7, 10, 12). The elasticity of the tabs 20 allows them to retract to insert the screws 6 into the wells 19 and to move them from their high position to their low position.

In order to prevent the screws 6 from moving too easily from their high position to their low position, the cover 15 has low walls 21 which are housed behind the tabs 20 which have the low protuberances 18 in order to limit or even prevent their deformation (see figure 12 for example). In other words, the low walls 21 constitute means of reinforcing the tabs 20.

For delivery of the connector 2, the screw 6 is pre-assembled on the connector 2. More particularly, in the example shown in the figures, for delivery, the screw 6 is pre-positioned in the screw holder 10 and the cover 15 is in the closed position. The cover 15 in the closed position prevents the screws 6 from moving out of the cavities 5 and protects the cavities 5 and the screws 6 from dust in particular.

The connector 2 is also provided with a portion (electrical terminals connected to conducting wires) of interlock circuitry. The interlock circuit controls the power supply and the powering of connector 2. When the interlock circuit is open, the connector 2, and therefore the screws 6, are not powered. When the interlock circuit is closed, connector 2, and therefore the screws 6, can be energised.

In the example embodiment shown in the figures, the interlock circuit comprises a shunt 25 mounted in a housing 22 of the cover 15 (see figure 11). When the cover 15 is in the closed position, the shunt 25 makes an electrical connection between two terminals 23 of the interlock circuit. When the cover 15 is in the open or semi-closed position, the shunt does not contact the terminals 23 and the interlock circuit remains open (see Figure 6). The shunt 25 and the terminals 23 are connecting elements of an interlock circuit. Furthermore, the cover 9 offers additional IPXXB protection compared to the interlock circuit. Thus, an operator handling the connector 2 while the cover 15 is in the open or semi-closed position (e.g. during a maintenance operation) has no risk of electrocution.

It can also be noted that if the operator forgets to fully tighten a screw 6, the cover 15 cannot be closed. This not only offers protection against possible electrocution (as the interlock circuit is open), but also provides a visual indicator of a mounting default.

An example of a method for connecting and/or disconnecting a connection assembly 1 is described below.

This process includes the following steps or operations.

An operator places the cover 15 in the open position and the screws 6 in the screw holder 10 (see Figure 6). As the tabs 20 are not blocked by the walls 21, the high protrusions 17 can be retracted so that the screws 6 can be placed in the high position, with the crown 24 of the cap 9 located between the high 17 and low 18 protrusions. The operator further pushes the screws 6 towards their low position. As the tabs 20 are not blocked by the walls 21, the low protrusions 18 can retract so that the screws 6 can be moved to their low position. The screws 6 are thus pre-assembled in the low position, in the connector 2, for delivery. The cover 15 is folded back into the closed position. The low walls 21 also block the tabs 20 and the low protrusions 18 cannot retract, thus preventing the screws 6 from being moved to their high position.

For assembly, an operator opens the cover 15. While the connector is positioned in front of the interface of the counter connector 3, with the threaded rod 8 resting on the first thread of the corresponding thread on the counter connector 3, the screws 6 are pushed to their low position. The operator can then screw in the screws 6. After screwing in, the screws 6 are again in the low position.

When screwed in (see Figures 8 and 9), the screws 6 are protected by the respective housings of the connector 2 and counter-connector 3. In particular, they are protected by their respective well 19 and cap 9. They are no longer accessible. The interlock circuit can then be closed, together with the cover 15 (see Figures 14 and 15), to safely energise the connector 2.

If a maintenance operation is necessary, the cover 15 is opened (see figure 8 for example); the interlock circuit is opened when the cover 15 is placed in a position between the half-closed position and the fully open position; the connector 2 is no longer under tension; the screws 6 can be unscrewed safely; during the unscrewing operation, they rise to the top position (see figures 10, 12 and 13). In this position, they lock the cover 15 in a semi-closed position if it is closed again. The interlock circuit can only remain open.

Thanks to the cap 9 and the tabs 20, IPXXB protection is maintained even if the cover 15 is in a semi-closed or open position (see figure 9 for example).

The cover 15 can also be folded back to a semi-closed position, to hold the screws 6 in a high position through the interaction of the walls 21 with the tabs 20.

The connector 2 optionally comprises a data matrix 26. As shown in Figures 13 and 14, the data matrix 26 comprises a part or portion which is disposed on an outer surface of the cover 15 and a part or portion which is disposed on an outer surface of the housing 4 (which outer surface does not correspond to the cover 15, i.e., is not disposed on it). Thus, if the cover 15 is in an open or semi-closed position, the data matrix 26 cannot be read in its entirety (Figure 13). However, if the cover 15 is in the closed position, the entire data matrix can be read (Figure 14).

## Claims

1. An electrical power connector (2), comprising a housing (4), at least one electrically conductive element (200), a cover (15) and connection elements (23, 25) of an interlock circuit, wherein the housing (4) has at least one cavity (5) for housing a screw (6) configured to establish an electrical connection with said at least one electrically conductive element (200), wherein the housing (4) comprises retention means (17, 18) configured to hold the screw (6) in a high position, wherein the cover (15) is mounted on the housing (4) and is configured to occupy at least an open position in which the housing (4) is open and the screw (6) is accessible to be screwed in or out, and a closed position in which the housing (4) is closed and the screw (6) is not accessible, and wherein the interlock circuit is open when the cover (15) is in the open position and closed when the cover (15) is in the closed position,
**characterised in that** the screw (6) prevents the cover (15) from being placed in the closed position when it is in the high position.

2. A connector (2) according to claim 1, wherein the cover (15) is rotated from its open to its closed position about a hinge (16) and the screw (6) blocks this rotation in an intermediate position of the cover (15) when it is in its high position.

3. A connector (2) according to one of the preceding claims, comprising a screw holder (10) and the retention means (17, 18) for retaining the screw (6) in the high position are arranged on this screw holder (10).

4. A connector (2) according to one of the preceding claims, wherein the retention means (17, 18) are disposed on tabs (20) forming a wall portion of a well (19) configured to receive a head (7) of the screw (6) and the cover (15) comprises reinforcing means (21) disposed behind at least one tab (20) when the cover (15) is in a closed or semi-closed position.

5. A connector (2) according to any of the preceding claims, wherein the screw (6) comprises a cap (9) of electrically insulating material.

6. A connector (2) as claimed in claim 5, wherein the cap (9) has serrated structures (27) configured to cooperate with a screwing tool configured to screw the screw (6).

7. A connector (2) according to any of claims 5 and 6, wherein the cap (9) comprises a crown (24) configured to cooperate with the retention means (17, 18).

8. A connector (2) according to any of the preceding claims, comprising a data matrix (26), a part of which is arranged on an outer surface of the cover (15) and a part of which is arranged on an outer surface of the housing (4) which does not correspond to the cover (15), the data matrix (26) being readable in its entirety only when the cover (15) is in the closed position.

9. A connection assembly (1) comprising a counter-connector (3) and a connector (2) according to one of the preceding claims, wherein the high position of the screw (6) corresponds to its position in the housing (4) when it is completely unscrewed from the counter-connector (3).

10. A method of disconnecting a connection assembly (1) comprising a connector (2), said connector comprising connection elements (23, 25) of an interlock circuit, a screw (6) with a head (7), the head (7) being concealed by a cover (15) of the connector (2), the method comprising an opening operation of the cover (15) which causes the interlock circuit to open at the connection elements (23, 25), said interlock circuit controlling the screw (6) is energised or not, followed by an unscrewing operation of the screw (6), during which the head (7) is moved by one step to the other, 25), which interlock circuit controls the energisation of the screw (6), followed by an operation of unscrewing the screw (6), during which the head (7) is moved from a first position to a second position, **characterised in that** the head (7) prevents the cover (15) from being placed in a position in which the interlock circuit is closed, when the head (7) is in the second position.
